# EUROPÄISCHE PATENTANMELDUNG

(11) **EP 1 223 348 A2**
(43) Veröffentlichungstag der Anmeldung: **17.07.2002**
(21) Anmeldenummer: 01126908.1
(22) Anmeldetag: 13.11.2001
(51) Int. Cl.: F15C 3/04, F15B 21/14

(54) **Vorrichtung zum Umwandeln eines Hydraulik- oder Pneumatikstroms**

(30) Priorität: 13.01.2001 DE 10101390
(71) Anmelder: Krupp Bilstein GmbH, 58256 Ennepetal (DE)
(72) Erfinder: Wimmenauer, Gero, Dipl.-Ing., 51467 Bergisch Gladbach (DE)

(57) **Zusammenfassung**

Zum Umwandeln wenigstens eines Teils eines die Strömungsrichtung ständig wechselnden Hydraulik- oder Pneumatikstroms in einen Strom gleich bleibender Strömungsrichtung wird der Einsatz einer Vorrichtung vorgeschlagen, die eine Verwendung von zwei Paar paarweise gleich wirkenden Rückschlagventilen vorsieht, welche jeweils an einen gemeinsamen Raum mit einer Zu- bzw. Abflussöffnung (Zulaufbohrungen 6.3, 6.4) angeordnet sind, wobei ein Paar (Membran 6.3, 6.4) zum gemeinsamen Raum hin schließend und ein Paar (Membran 6.1, 6.2) zum gemeinsamen Raum hin öffnend aufgebaut ist und wobei jeweils der nach außen gerichtete Ventilzufluss des einen Rückschlagventilpaares mit dem nach außen gerichteten Ventilabfluss des anderen Rückschlagventilpaares hydraulisch miteinander und mit einem Leitungsanschluss (Zulaufbohrung 12, 16) des Hydraulik- oder Pneumatikstroms mit wechselnder Strömungsrichtung verbunden sind.

## Beschreibung

Die Erfindung betrifft eine Vorrichtung zum Umwandeln wenigstens eines Teils eines die Strömungsrichtung ständig wechselnden Hydraulik- oder Pneumatikstroms in einen Strom gleich bleibender Strömungsrichtung.

Bei Anwendungen mit oszillierenden Hydraulik- oder Pneumatikströmungen, die durch äußere Einflüsse angeregt werden, wird manchmal zusätzlich, beispielsweise für Steuer- oder Regelzwecke, ein Hydraulik- oder Pneumatikstrom mit gleich bleibender Strömungsrichtung benötigt. Üblicherweise wird zur Erzeugung dieses gleich bleibenden Hydraulik- oder Pneumatikstroms ein einen Druck aufbauendes Aggregat mit separater Energiezufuhr eingesetzt. Hierzu wird zusätzliche Energie benötigt.

Insbesondere bei Einsatzfällen, wie bei hydraulischen Stoßdämpfern oder bei Wellengeneratoren, bei denen ein großer Teil der Energie des die Strömungsrichtung ständig wechselnden Hydraulik- oder Pneumatikstroms verlorengeht oder sogar vernichtet werden muss, bietet es sich an, diese Energie für den vorher beschriebenen Einsatzfall auszunutzen.

Von daher liegt der Erfindung die Aufgabe zugrunde, eine Vorrichtung zu schaffen, die wenigstens einen Teil eines die Strömungsrichtung ständig wechselnden Hydraulikoder Pneumatikstroms in einen Strom mit gleich bleibender Strömungsrichtung umzuwandeln.

Diese Aufgabe wird erfindungsgemäß durch die Merkmale des Anspruchs 1 gelöst. Vorteilhafte Aus- und Weiterbildungen sind in den Ansprüchen 2 bis 6 beschrieben.

Die mit der Erfindung erzielten Vorteile bestehen insbesondere darin, dass durch eine einfache Vorrichtung die Energie wenigstens eines Teils eines die Strömungsrichtung ständig wechselnden Hydraulik- oder Pneumatikstroms ausgenutzt wird, um einen Strom mit gleich bleibender Strömungsrichtung zu erzeugen. Dadurch werden entweder Wirkungsgrade erhöht oder es wird sogar zu vernichtende Energie in Antriebsenergie umgewandelt.

Bei der Ausbildung der Vorrichtung nach den Ansprüchen 3 bis 6 wird erreicht, dass die Vorrichtung einen sehr einfachen Aufbau erhält und dass viele gleiche Teile für verschiedene Funktionen einsetzbar sind, was eine äußerst wirtschaftliche Fertigung zur Folge hat. Bei der als Ausführungsbeispiel beschriebenen Ausbildung der Vorrichtung werden nur vier verschiedene Einbauteile benötigt.

Ein Ausführungsbeispiel der Erfindung ist in der Zeichnung dargestellt und wird im Folgenden näher beschrieben. Es zeigen
- Fig. 1: einen Schnitt durch eine erfindungsgemäße Vorrichtung, bei der die alternativen Strömungsrichtungen angegeben sind,
- Fig. 2: die Form der Einbauteile und
- Fig. 3: eine alternative Ausführung gemäß Fig. 1.

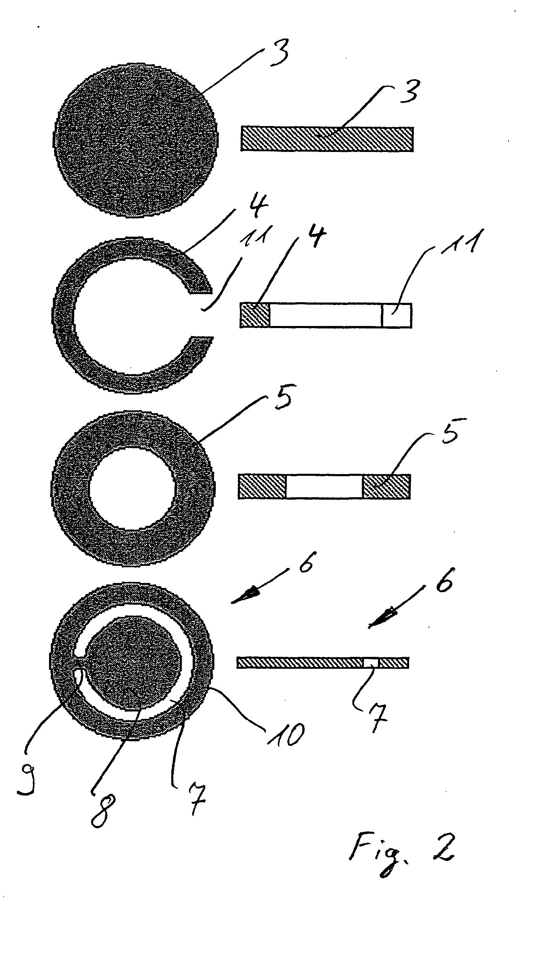

Die im Ausführungsbeispiel beschriebene Vorrichtung weist ein Gehäuse 1 auf, das eine zylindrische Bohrung 2 besitzt. Die wesentlichen Einbauteile sind übereinander geschichtet in dieser Bohrung 2 angeordnet und sind als kreis- oder ringförmige Platten mit gleichem Außendurchmesser ausgebildet. Die zentrale Bohrung 2 des rohrförmigen Gehäuses 1 wird nach oben und nach unten durch einen kreisförmigen geschlossenen Deckel 3 verschlossen. Zwischen diesen Deckeln befinden sich aufeinander geschichtet C-förmig ausgebildete Zulaufringe 4, Kammerringe 5 mit geschlossenem Ringquerschnitt und kreisförmige Membranen 6, die eine sichelförmige Ausnehmung 7 aufweisen, wodurch zentrisch eine Klappe 8 entsteht, die an einem federnden Steg 9 mit dem umlaufenden Kranz 10 verbunden ist. Die vorbeschriebenen Einbauteile sind in Fig. 2 in der Draufsicht und im Schnitt dargestellt.

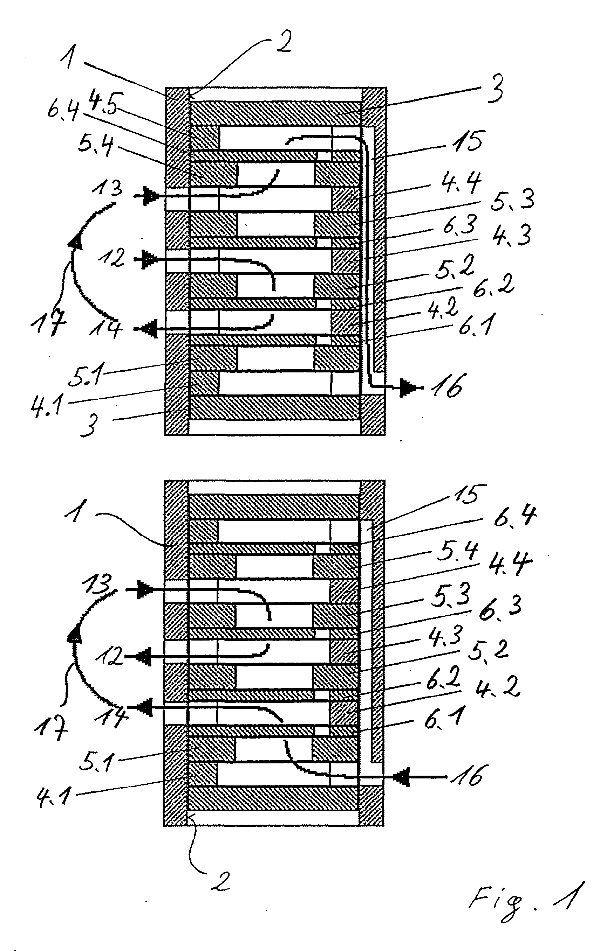

Die in Fig. 1 dargestellte Vorrichtung setzt sich von unten nach oben gesehen aus den nachfolgenden Bauteilen zusammen: Deckel 3, Zulaufring 4.1, Kammerring 5.1, Membran 6.1, Zulaufring 4.2, Membran 6.2, Kammerring 5.2, Zulaufring 4.3, Membran 6.3, Kammerring 5.3, Zulaufring 4.4, Kammerring 5.4, Membran 6.4, Zulaufring 4.5 und Deckel 3. Die Deckel 3 sind mit dem rohrförmig ausgebildeten Gehäuse 1 durch Verschrauben, Verschweißen oder Verkleben fest und dicht verbunden.

Der Innendurchmesser des Kammerringes 5 ist geringförmig kleiner als der Außendurchmesser der Klappe 8 der Membran 6. Der Innendurchmesser des Zulaufrings 4 ist größer als der Durchmesser der Klappe 8 der Membran 6. Sein Innendurchmesser entspricht vorzugsweise dem Innendurchmesser des Kranzes 10 der Membran 6. Die radiale Öffnung 11 des Zulaufringes 4 ist den Erfordernissen des jeweiligen Zulaufs angepasst. Der Zulauf kann als sich radial durch das Gehäuse 1 erstreckende Zulaufbohrung 12, 13, 14, 16 ausgebildet sein. Der Zulauf kann aber auch ein axial, radial oder andersartig verlaufender Kanal 15 an der Innenseite des Gehäuses 1 sein, der in beliebiger Richtung an einer Stelle, beispielsweise durch die Zulaufbohrung 16, durch das Gehäuse nach außen führt.

Die beiden in Fig. 1 übereinander dargestellten Schnitte durch die Vorrichtung sind identisch. Es ist lediglich dargestellt, welche Auswirkung der Hydraulik- oder Pneumatikstrom mit wechselnder Strömungsrichtung hat. Dieser Strom ist an den Zulaufbohrungen 12 und 16 angebunden. Die wechselnde Strömungsrichtung ist durch die Pfeile mit unterschiedlichen Richtungen erkennbar. Der Hydraulik- oder Pneumatikstrom mit gleich bleibender Strömungsrichtung ist an den Zulaufbohrungen 13 und 14 angebunden.

Bei einem Überdruck der pulsierend wechselnden Strömung an der Zulaufbohrung 12 gegenüber der Zulaufbohrung 16 fließt der Hydraulikstrom in der Vorrichtung entsprechend der oberen Darstellung in Fig. 1 durch die Zulaufbohrung 12 in den anliegenden Zulaufring 4.3 nach unten durch den Kammerring 5.2. Er hebt die darunter liegende Membran 6.2 gegenüber dem darüber liegenden Kammerring 5.2 ab. Die Strömung verlässt dann über den zur Zulaufbohrung 14 gehörenden Zulaufring 4.2 die Vorrichtung nach außen und strömt über eine nicht näher dargestellte Leitung 17, in der verschiedene hydraulische oder pneumatische Elemente angeordnet sein können, zur Zulaufbohrung 13 und durch diese in den zugehörigen Zulaufring 4.4 in den darüber liegenden Kammerring 5.4. Nach Anheben der darüber liegenden Membran 6.4 strömt er in den mit dem Kanal 15 verbundenen obersten Zulaufring 4.5 und dann durch den Kanal 15 und an der Zulaufbohrung 16 wieder in den Kreislauf des wechselnden Hydraulik- oder Pneumatikstroms.

Wenn der Hydraulik- oder Pneumatikstrom seine Richtung gewechselt hat und somit der höhere Druck an der Zulaufbohrung 16 des Kanals 15 und der niedrigere Druck an der Zulaufbohrung 12 liegt, erfolgt die Durchströmung der Vorrichtung gemäß der unteren Darstellung in Fig. 1. Der Hydraulik- oder Pneumatikstrom fließt dann nicht durch den Kanal 15, sondern direkt durch die Öffnung 11 des anliegenden untersten Zulaufringes 4.1 weiter durch den darüber liegenden Kammerring 5.1. Er hebt die darüber liegende Membran 6.1 an und verlässt über den darüber liegenden Zulaufring 4.2 und die zugehörige Zulaufbohrung 14 die Vorrichtung, um über die Leitung 17 wieder durch die Zulaufbohrung 13 in den zugehörigen Zulaufring 4.4 einzutreten. Über den darunter liegenden Kammerring 5.3 verlässt der Hydraulik- oder Pneumatikstrom unter Anheben der Membran 6.3 über den darunter liegenden Zulaufring 4.3 und die zugehörige Zulaufbohrung 12 die Vorrichtung.

Die vorstehende Beschreibung verdeutlicht, dass die Vorrichtung in einfacher Weise geeignet ist, wenigstens einen Teil des an den Zulaufbohrungen 12 und 16 angeschlossenen Hydraulik- oder Pneumatikstroms mit ständig wechselnder Strömungsrichtung einen entsprechenden Strom mit gleicher Strömungsrichtung zu generieren, der ständig an der Zulaufbohrung 14 aus der Vorrichtung austritt und ständig an der Zulaufbohrung 13 wieder in die Vorrichtung eintritt.

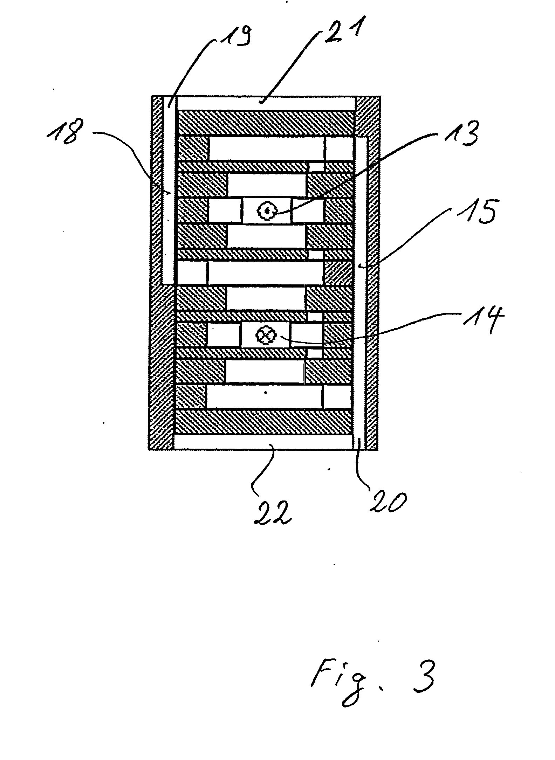

Fig. 3 zeigt einen geringfügig anderen Aufbau der Vorrichtung entsprechend Fig. 1. Bei dieser Ausbildung sind die Zuläufe der Strömung mit ständig wechselnder Strömungsrichtung oberhalb und unterhalb der Deckel 3 angeordnet. Entsprechend entfallen die Zulaufbohrungen 13 und 16. Bei dieser Ausbildung werden zwei Kanäle 15 und 18 in das Gehäuse 1 angebracht und verlassen das Gehäuse 1 axial an den Stellen 19 und 20, wo sie jeweils in einen Raum 21, 22 oberhalb und unterhalb des Deckels 3 münden.

Der Hydraulik- oder Pneumatikstrom mit ständig wechselnder Richtung wird dann an diese Räume 21, 22 beispielsweise über das Gehäuse 1 umfassende Schlauchanbindungen geführt.

Das Gehäuse muss nicht rohrförmig ausgebildet sein. Es kann auch beispielsweise würfelförmig andere Form haben. Dabei können dann mehrere Bohrungen 2 in das Gehäuse 1 eingebracht werden, die die vorbeschriebenen Einbauteile aufnehmen. Dadurch können mehrere Vorrichtungen parallel oder im Wechsel zueinander geschaltet sein, was die Kapazität des Stromes mit gleich bleibender Richtung erhöht oder diesen Strom hinsichtlich seines Pulsierens vergleichmäßigt.

Als wesentliches technisches Merkmal der Erfindung, unabhängig von dem vorstehend geschilderten Ausführungsbeispiel, ist festzuhalten, dass die Erfindung beinhaltet, dass an jeweils einem Raum mit Zu- bzw. Abflussöffnung Rückschlagventile angeordnet sind, die gegenüber diesem Raum eine gleiche Wirkung haben. Das bedeutet, dass an der Zulaufbohrung 13 sich nach innen ein Raum erstreckt, der die Bohrung des Zulaufrings 4.4 und die Bohrungen der Kammerringe 5.3 und 5.4 umfasst. Anschließend an den vorbeschriebenen Raum schließen sich zwei Rückschlagventile an, hier die Membranen 6.3 und 6.4, die gegenüber dem vorbeschriebenen Raum öffnend sind.

Als weiterer gemeinsamer Raum ist die Bohrung des Zulaufrings 4.2 zu erkennen, der über die Öffnung 11 dieses Zulaufrings 4.2 mit der Zulaufbohrung 14 in Verbindung steht. An diesen gemeinsamen Raum schließen sich die Membranen 6.1 und 6.2 an, die gegenüber diesem gemeinsamen Raum schließend wirken.

Des Weiteren ist der nach außen gerichtete Ventilabfluss des einen Rückschlagventilpaares jeweils mit einem nach außen gerichteten Ventilzufluss des anderen Hydraulikventilpaares und ein Leitungsanschluss hydraulisch miteinander verbunden, also die Membranen 6.2 und 6.3 mit der Zulaufbohrung 12 und die Membranen 6.1 und 6.4 mit der Zulaufbohrung 16. Letztere Zulaufbohrungen 12 und 16 sind die Leitungsanschlüsse an den Hydraulik- oder Pneumatikstrom mit wechselnder Strömungsrichtung.

### Bezugszeichenliste

- 1.: Gehäuse
- 2.: Bohrung
- 3.: Deckel
- 4.: Zulaufring
- 4.1: Zulaufring
- 4.2: Zulaufring
- 4.3: Zulaufring
- 4.4: Zulaufring
- 4.5: Zulaufring
- 5.: Kammerring
- 5.1: Kammerring
- 5.2: Kammerring
- 5.3: Kammerring
- 5.4: Kammerring
- 6.: Membran
- 6.1: Membran
- 6.2: Membran
- 6.3: Membran
- 6.4: Membran
- 7.: Ausnehmung
- 8.: Klappe
- 9.: Steg
- 10.: Kranz
- 11.: Öffnung
- 12.: Zulaufbohrung
- 13.: Zulaufbohrung
- 14.: Zulaufbohrung
- 15.: Kanal
- 16.: Zulaufbohrung
- 17.: Leitung
- 18.: Kanal
- 19.: Stelle
- 20.: Stelle
- 21.: Raum
- 22.: Raum

## Patentansprüche

1. Vorrichtung zum Umwandeln wenigstens eines Teils eines die Strömungsrichtung ständig wechselnden Hydraulik- oder Pneumatikstroms in einen Strom gleich bleibender Strömungsrichtung unter Verwendung von zwei Paar paarweise gleich wirkenden, an jeweils einen gemeinsamen Raum mit einer Zu- bzw. Abflussöffnung (Zulaufbohrungen 13, 14) angeordneten Rückschlagventilen, wobei ein Paar (Membran 6.3, 6.4) zum gemeinsamen Raum hin schließend und ein Paar (Membran 6.1, 6.2) zum gemeinsamen Raum hin öffnend aufgebaut ist und wobei jeweils der nach außen gerichtete Ventilzufluss des einen Rückschlagventilpaares mit dem nach außen gerichteten Ventilabfluss des anderen Rückschlagventilpaares hydraulisch miteinander und mit einem Leitungsanschluss (Zulaufbohrung 12, 16) des Hydraulik- oder Pneumatikstroms mit wechselnder Strömungsrichtung verbunden sind.

2. Vorrichtung nach Anspruch 1, **dadurch gekennzeichnet, dass** alle Bauteile in einem gemeinsamen Gehäuse (1) angeordnet sind.

3. Vorrichtung nach Anspruch 1 oder Anspruch 2, **dadurch gekennzeichnet, dass** das Gehäuse (1) wenigstens eine zylindrische Bohrung (2) aufweist, vorzugsweise rohrförmig ausgebildet ist und die wesentlichen Einbauteile kreis- oder ringförmige Platten sind und in dieser Bohrung (2) angeordnet sind.

4. Vorrichtung nach Anspruch 3, **dadurch gekennzeichnet, dass** das Rückschlagventil eine kreisförmige Membran (6) mit einer zentrischen sichelförmigen Ausnehmung (7) als Rückschlagkörper aufweist.

5. Vorrichtung nach einem oder mehreren der Ansprüche 2 bis 4, **dadurch gekennzeichnet, dass** das Gehäuse (1) an seiner Bohrung (2) einen oder mehrere Kanäle (15, 18) aufweist.

6. Vorrichtung nach einem oder mehreren der Ansprüche 2 bis 5, **dadurch gekennzeichnet, dass** wenigstens ein Teil der Ventilanschlüsse über sich radial zur Bohrung (2) durch das Gehäuse (1) erstreckende Zulaufbohrungen (13, 14) mit den Räumen zwischen den Rückschlagventilen (Membran 6.1 und 6.2, 6.3 und 6.4) verbunden sind.
